# FASCICULE DE BREVET EUROPEEN

(11) **EP 1 466 120 B1**
(45) Date de publication et mention de la délivrance du brevet: **31.05.2006**
(21) Numéro de dépôt: 03712237.1
(22) Date de dépôt: 14.01.2003
(51) Int. Cl.: F16L 19/02, F16L 19/028, F16L 19/08

(54) **MOYENS DE CONNEXION BOUT A BOUT DE DEUX ELEMENTS DE CONDUITE**
VERBINDUNGSVORRICHTUNG ZUR ENDE-ZU-ENDE-VERBINDUNG VON ZWEI ROHREN
MEANS FOR BUTT CONNECTION OF TWO PIPE ELEMENTS

(30) Priorité: 18.01.2002 FR 0200605
(43) Date de publication de la demande: 13.10.2004
(73) Titulaire: LEGRIS SA, 35000 Rennes (FR)
(72) Inventeur: LEGEAI, Patrick, F-35133 Javene (FR); GUIVAR'CH, Olivier, F-35650 Le Rheu (FR)
(74) Mandataire: Lavialle, Bruno François Stéphane
(86) Numéro de dépôt international: PCT/FR2003/000096
(87) Numéro de publication internationale: WO 2003/062692

(56) Documents cités:
- CH-A- 319 697
- FR-A- 782 322
- US-A- 2 761 702
- US-A- 4 691 944

## Description

La présente invention concerne des moyens de connexion bout à bout de portions terminales d'éléments de conduite.

De tels de moyens de connexion sont par exemple destinés à être utilisés dans des circuits de fluide sous pression pour raccorder deux éléments de circuit entre eux, tels que des canalisations, ou une canalisation à un organe fonctionnel émetteur ou récepteur de fluide.

On connaît des dispositifs de raccordement de deux canalisations comportant une union formée d'un corps tubulaire ayant deux extrémités par lesquelles une extrémité de chaque canalisation est destinée à être introduite dans l'union. Le dispositif de raccordement comprend également deux manchons vissés chacun sur une extrémité du corps tubulaire pour déformer, entre un épaulement interne du manchon et l'extrémité du corps tubulaire, une rondelle à griffes d'un état de passage libre de la canalisation vers un état de retenue de la canalisation. Le positionnement axial des canalisations dans le corps tubulaire est généralement assuré par l'intermédiaire d'épaulements annulaires agencés dans le corps tubulaire pour former des butées à l'enfoncement des canalisations dans l'union. Lorsque deux canalisations d'un circuit sont reliées l'une à l'autre et aux autres éléments du circuit par de tels dispositifs de raccordement, le retrait d'une des canalisations, par exemple pour la remplacer, nécessite, après le retrait des manchons, de pouvoir écarter l'un de l'autre les deux dispositifs de raccordement afin d'extraire les extrémités de la canalisation hors des corps tubulaires de ces dispositifs. Un tel démontage est difficilement réalisable dans un circuit relativement complexe dont certains éléments peuvent en outre être fixés sur des supports.

Dans une autre réalisation, les moyens de connexion comprennent un manchon divisé en des première et deuxième parties axialement successives pourvues de moyens pour assurer la liaison étanche et démontable de ces parties respectivement à l'extrémité du corps tubulaire et à la canalisation, et une bague amovible de butée pourvue de moyens de son blocage axial sur la canalisation en retrait de l'extrémité de celle-ci pour constituer un épaulement de butée à l'enfoncement de la canalisation dans le corps tubulaire et un épaulement de butée axiale entre la deuxième partie du manchon et la canalisation. Il suffit de désolidariser un ou des manchons du ou des corps tubulaires correspondants pour découvrir les bagues de butée et ainsi y accéder pour les débloquer des canalisations sur lesquelles elles sont implantées. Un retrait latéral des canalisations est alors possible.

On connaît du document US-A-2 761 702 un dispositif de raccordement comportant des douilles filetées qui sont enfilées sur des extrémités épaulées de conduite et qui sont réunies par un manchon taraudé.

L'invention propose des moyens de connexion d'un nouveau type fournissant une alternative simple aux moyens existants, qui assure une connexion rapide et efficace des éléments de circuit les uns aux autres et permette un retrait aisé des éléments formant le circuit.

A cet effet, on prévoit, selon l'invention, des moyens de connexion d'une première portion terminale d'élément de conduite et d'une seconde portion terminale d'élément de conduite, les moyens de connexion comprenant un joint d'étanchéité intercalé entre des faces d'extrémité des première et seconde portions terminales et des moyens de fixation qui sont montés sur les première et seconde portions terminales et y sont associés à des premiers et seconds moyens de butée axiale le long des première et seconde portions terminales pour maintenir ces dernières rapprochées en comprimant entre elles le joint d'étanchéité. Les premiers moyens de butée axiale comprennent un épaulement externe formé sur la première portion terminale au voisinage de la face d'extrémité de celle-ci et les seconds moyens de butée axiale comprennent une douille amovible pourvue de moyens de son blocage axial le long de la seconde portion terminale.

Selon un premier mode de réalisation, les premiers moyens de butée comprennent également une douille amovible pourvue de moyens de son blocage axial le long de la première portion terminale et les seconds moyens de butée comprennent un épaulement externe formé sur la seconde portion terminale au voisinage de la face d'extrémité de celle-ci, les douilles amovibles étant ouvrantes pour permettre leur engagement latéral sur la portion terminale correspondante et étant agencées pour coopérer avec l'épaulement externe de celle-ci.

Selon une première caractéristique particulière de ce mode de réalisation, les moyens de fixation comprennent des pattes d'encliquetage ayant une extrémité solidaire d'une des douilles et une extrémité opposée qui s'étend au-delà de la face d'extrémité de la portion terminale sur laquelle la douille est montée et qui est agencée pour agripper l'autre douille.

La connexion est alors réalisée en engageant latéralement les douilles sur les portions terminales puis en ramenant celles-ci vers les épaulements externes de ces portions terminales pour encliqueter les douilles l'une sur l'autre de telle manière que les douilles, en coopérant avec les épaulements externes des portions terminales, maintiennent ces dernières rapprochées.

Selon une deuxième caractéristique particulière de ce mode de réalisation, associée ou non avec la caractéristique précédente, les douilles ont un diamètre externe au moins égal à un diamètre externe des épaulements externes des portions terminales et les moyens de fixation comprennent une section tubulaire filetée et une section tubulaire taraudée qui sont solidaires chacune d'une bague montée sur une des douilles de telle manière que les douilles forment des butées axiales pour les bagues, au moins une des sections tubulaires filetée et taraudée s'étendant au-delà de la face d'extrémité de la portion terminale sur laquelle elle est montée pour être engagée sur l'autre section tubulaire lorsque les bagues sont en butée sur les douilles.

La connexion est alors réalisée en enfilant les bagues sur les portions terminales puis en engageant latéralement les douilles sur ces portions terminales. Les bagues sont ensuite ramenées sur les douilles qui, en coopérant avec les épaulements externes des portions terminales, assurent le blocage axial des bagues par rapport à ces portions. Il est possible de la sorte d'obtenir un raccordement résistant adapté en particulier aux fortes pressions. En outre, lorsque les moyens de connexion sont susceptibles d'être utilisés avec des éléments de conduite de diamètres différents, il est intéressant de prévoir un jeu de douilles ayant des diamètres internes qui correspondent aux différents diamètres externes des éléments de conduite et des diamètres externes identiques de telle manière que l'on puisse utiliser les mêmes bagues avec toutes les douilles du jeu.

De préférence, dans ce mode de réalisation, l'une des douilles comporte une partie agencée pour s'étendre au-delà de la face d'extrémité de la portion terminale correspondante lorsque la douille est en butée contre l'épaulement externe de cette portion terminale et pour assurer un positionnement du joint d'étanchéité en regard de la face terminale.

Ceci permet de maintenir le joint d'étanchéité lors du montage en assurant son bon positionnement par rapport aux portions terminales d'éléments de conduite, ce qui limite les risques de fuite dus à un mauvais montage de ce joint.

Selon un deuxième mode de réalisation, la douille amovible est radialement déformable et a une surface externe ayant une portion tronconique, les moyens de fixation étant solidaires de première et deuxième bagues montées respectivement sur les première et seconde portions terminales, la première bague possédant un épaulement interne pour coopérer avec l'épaulement externe de la première portion terminale et la seconde bague possédant une surface interne tronconique pour coopérer avec la portion tronconique de la douille amovible et constituer un moyen de serrage de la douille amovible sur la seconde portion terminale.

Il est ainsi possible de raccorder une conduite ayant une extrémité épaulée à une conduite ne possédant pas d'extrémité épaulée. Les moyens de connexion sont alors utilisables avec plusieurs types de conduites et en particulier des conduites qui ont été mises à longueur sur site.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en élévation des moyens de connexion conformes à un premier mode de réalisation de l'invention, en position connectée,
- la figure 2 est une demi-vue en coupe longitudinale de ces moyens de connexion,
- la figure 3 est une vue en perspective d'une douille utilisée dans ces moyens de connexion,
- les figures 4 et 5 sont des vues en perspective, respectivement en position déconnectée et en position connectée, de douilles utilisées dans une variante du premier mode de réalisation,
- la figure 6 est une vue en coupe longitudinale de moyens de connexion selon un deuxième mode de réalisation de l'invention, la démi-vue supérieure représentant les moyens de connexion en position connectée et la demi-vue inférieure représentant les moyens de connexion en position déconnectée.

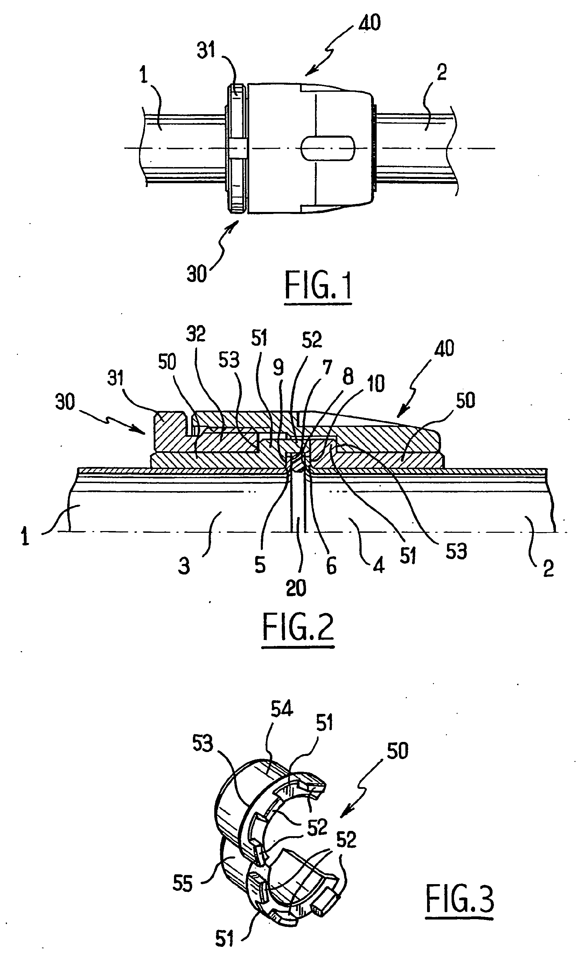

En référence aux figures 1 à 3, les moyens de connexion selon le premier mode de réalisation de l'invention sont destinés à permettre le raccordement bout à bout de deux conduites 1, 2 ayant chacune une portion terminale 3, 4 pourvue d'un collet battu 5, 6 définissant d'un côté une face terminale 7, 8 de la conduite 1, 2 et du côté opposé un épaulement 9, 10.

Les moyens de connexion conformes au premier mode de réalisation comprennent des moyens d'étanchéité d'une part et des moyens de fixation des conduites l'une à l'autre d'autre part.

Les moyens d'étanchéité comprennent un joint d'étanchéité 20 ici de forme torique. Le joint d'étanchéité est destiné à être disposé entre les deux faces terminales 7, 8 des conduites 1, 2 pour être comprimé entre celles-ci. Le joint d'étanchéité 20 a un diamètre interne sensiblement égal au diamètre interne des conduites 1, 2 et un diamètre externe légèrement supérieur au diamètre externe des collets battus 5, 6. Ce joint peut avoir d'autres formes et par exemple au lieu d'une section circulaire, une section sensiblement triangulaire ou en trapèze notamment lorsque les collets battus 5, 6 forment avec l'axe longitudinal de la conduite un angle inférieur à 90° ou une forme adaptée pour, lorsque le joint d'étanchéité 20 est comprimé, avoir une surface interne reliant les surfaces internes des conduites 1 et 2 sans créer de zone de rétention. Le joint d'étanchéité 20 peut également incorporer un élément électriquement conducteur pour assurer une continuité électrique entre les faces d'extrémité 7, 8 des conduites 1, 2. Cette disposition est intéressante pour éviter une accumulation de charges électrostatiques.

Les moyens de fixation comprennent une bague à section filetée généralement désignée en 30 et une bague à section taraudée généralement désignée en 40 destinées à être montées respectivement sur les portions terminales 3 et 4 par l'intermédiaire de douilles de butée généralement désignée en 50.

Les douilles de butée 50 ont un diamètre interne sensiblement égal au diamètre externe des portions terminales 3, 4 et possèdent une extrémité pourvue d'une collerette 51 externe. Des créneaux 52 formés de portions tubulaires s'étendent en saillie axiale de la collerette 51 et sont disposés sur celle-ci selon un cercle de diamètre supérieur au diamètre externe des collets battus 5, 6 et voisin du diamètre externe du joint d'étanchéité 20. La collerette 51 définit à l'opposé des créneaux 52 une face d'épaulement 53. Les douilles sont ouvrantes et sont ici constituées chacune de deux parties 54, 55 reliées par une charnière déformable de manière à pouvoir être engagée latéralement sur la portion terminale 3, 4. Les douilles pourraient également être en deux parties reliées par un anneau élastique pour être radialement expansibles de manière à passer les collets battus 5, 6.

La bague à section filetée 30 a un diamètre interne sensiblement égal au diamètre externe de la douille et inférieur au diamètre externe de la collerette 51 de sorte que la collerette 51 forme une butée axiale pour la bague. La bague à section filetée 30 est extérieurement divisée selon une direction axiale en une section de manoeuvre 31 à pans externes et une section filetée 32 de diamètre à fond de filet supérieur au diamètre externe de la collerette 51 de la douille 50.

La bague à section taraudée 40 est divisée intérieurement selon une direction axiale en un premier chambrage 41 de diamètre sensiblement égal au diamètre externe de la douille 50 relié par un épaulement interne 42 à un deuxième chambrage 43 de diamètre sensiblement égal au diamètre externe de la collerette 51 de la douille 50 et un taraudage 44 dont le diamètre correspond à celui de la section vissée 32.

La connexion est réalisée en enfilant les bagues 30, 40 sur les portions terminales 3, 4, puis en engageant latéralement les douilles 50 ouvertes sur les portions terminales 3, 4 et en refermant les douilles 50 sur les portions terminales 3, 4 des conduites. La collerette 51 des douilles 50 est amenée en appui contre l'épaulement 9, 10 des collets battus 5, 6. Les créneaux 52 s'étendent alors au-delà de la face d'extrémité des portions terminales.

Le joint d'étanchéité 20 est alors mis en place entre les créneaux 52 de l'une des douilles 50 de manière que le joint d'étanchéité 20 soit positionné en regard de la face d'extrémité 7, 8 de la portion terminale 3, 4 correspondante.

Les portions terminales 3, 4 des conduites 1, 2 sont ensuite approchées de telle manière que le joint d'étanchéité 20 soit intercalé entre les faces d'extrémité 7, 8 des portions terminales 3, 4 et que les créneaux 52 des douilles 50 soient intercalés les uns entre les autres.

Les bagues 30, 40 sont ramenées sur les douilles 50 et mises en butée des épaulements externes 53. On notera que les chambrages 41, 43 ont une longueur telle que le taraudage 44 s'étend au-delà de la collerette 51 de la douille 50 de la portion terminale 3 de telle sorte que la section filetée 32 peut être vissée dans le taraudage 44 jusqu'à ce que les créneaux 52 de chaque douille 50 arrive en butée contre la collerette 51 de l'autre douille 50. On remarquera également que les créneaux 52 ont une hauteur telle que le joint d'étanchéité 20 soit modérément comprimé. On comprend que les douilles 50 maintenues fermées par les bagues 30, 40 assurent le blocage axial des bagues 30, 40 par rapport aux portions terminales 3, 4 en coopérant avec les épaulements externes 9, 10 de celles-ci.

Lorsque l'autre portion terminale de la conduite 1 est reliée à un autre élément du circuit par des moyens de connexion identiques à ceux décrits, le retrait de la conduite 1 est effectué, pour chaque extrémité de la conduite 1, par dévissage des bagues 30, 40 puis écartement des douilles 50 et, ensuite, par un déplacement de la conduite 1 parallèlement à elle-même.

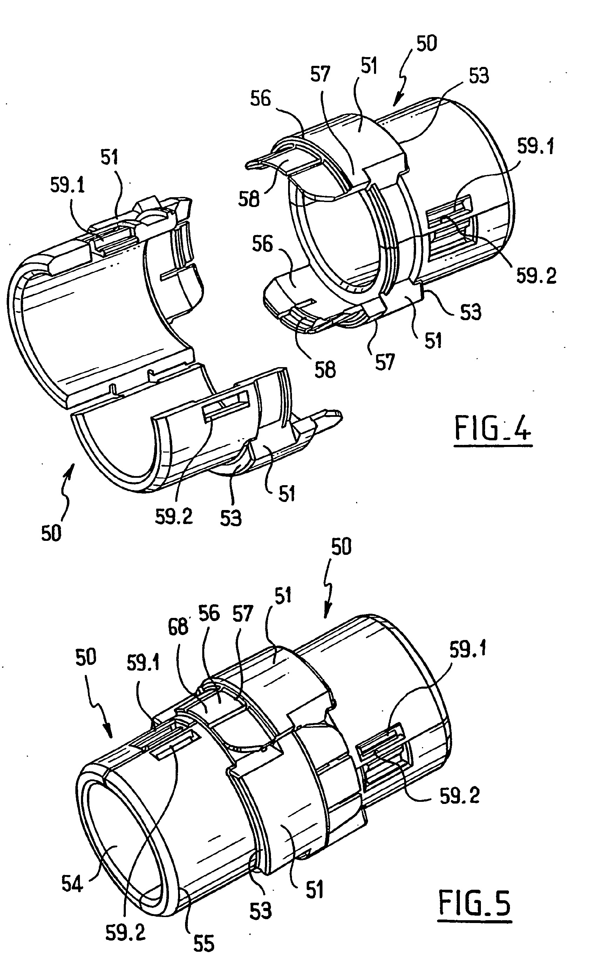

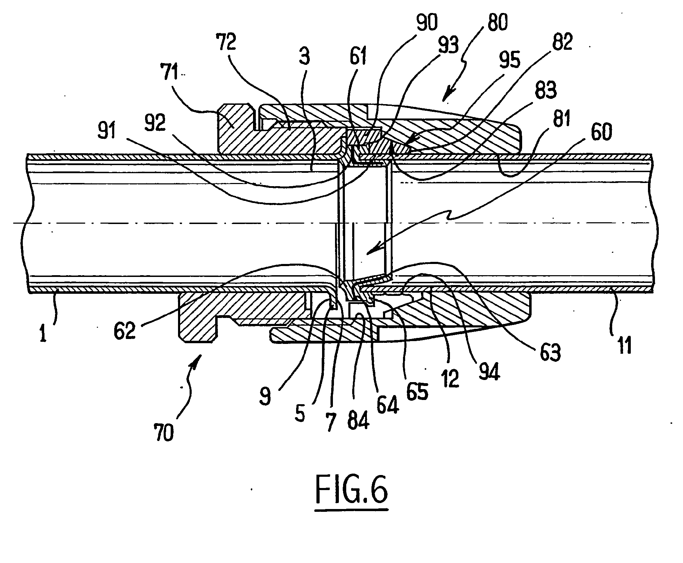

En variante, telle que représentée aux figures 4 et 5, chaque douille 50 comprend deux pattes élastiques 56 diamétralement opposées qui s'étendent axialement et ont une extrémité 57 solidaire de la collerette 51 et une extrémité 58 opposée agencée pour agripper l'autre douille 50. En outre, les parties 54, 55 de chaque douille 50 sont pourvues à l'opposé de la charnière d'éléments réciproques d'encliquetage 59.1, 59.2 de manière à pouvoir maintenir ces parties 54, 55 en position refermée.

Les douilles 50 engagées sur les portions terminales 3, 4 sont alors rapprochées, après interposition d'un joint d'étanchéité entre les faces d'extrémité des portions terminales 3, 4, en intercalant les pattes élastiques 56 de chaque douille 50 entre les pattes élastiques 56 de l'autre douille 50. Les douilles 50 sont alors encliquetées l'une avec l'autre. Les douilles 50 peuvent alors assurer seules la fixation des portions terminales 3, 4 l'une à l'autre.

Pour une fixation plus résistante, des bagues identiques aux bagues 30, 40 décrites précédemment peuvent être utilisées en combinaison avec ces douilles. Le montage est alors identique à celui précédemment décrit.

Les éléments identiques ou analogues à ceux décrits précédemment porteront une référence numérique identique dans la description qui suit du deuxième mode de réalisation de l'invention, en liaison avec la figure 6.

En référence à la figure 6, les moyens de connexion selon le deuxième mode de réalisation de l'invention sont destinés à permettre le raccordement bout à bout d'une conduite 1, identique à celle décrite précédemment, et une conduite 11 ayant une portion terminale 12 qui est dépourvue de tout type d'épaulement et qui possède une face d'extrémité 13.

Les moyens de connexion conformes au deuxième mode de réalisation comprennent des moyens d'étanchéité d'une part et des moyens de fixation des conduites l'une à l'autre d'autre part.

Les moyens d'étanchéité comprennent un joint d'étanchéité 60 qui comporte une section tubulaire externe 61 pour coiffer la portion terminale 12, une section annulaire 62 adjacente et en saillie vers l'intérieur de la section tubulaire externe 61 pour recouvrir la face d'extrémité 13 de la portion terminale 12 et une section tubulaire interne 63 s'étendant à partir de la section annulaire 62 en regard et à distance de la section tubulaire externe 61. Le joint d'étanchéité 60 comporte un insert rigide d'armature 64 en forme de L s'étendant dans la section annulaire 62 et la section tubulaire interne 63. Le joint d'étanchéité 60 peut également incorporer un élément électriquement conducteur pour assurer une continuité électrique entre les conduites 1, 11 pour éviter une accumulation de charges électrostatiques.

Les moyens de fixation comprennent une bague à section filetée généralement désignée en 70 destinée à être montée directement sur la portion terminale 3 et une bague à section taraudée généralement désignée en 80 destinée à être montée sur la portion terminale 12 par l'intermédiaire d'une douille de butée généralement désignée en 90.

La douille de butée 90 est fendue pour être radialement déformable. La douille de butée 90 est intérieurement divisée selon une direction axiale en un premier chambrage 91 de diamètre interne sensiblement égal au diamètre externe de la portion terminale 12 et un deuxième chambrage 92 dans lequel est logée la section tubulaire externe 63 du joint d'étanchéité 60. On notera que la section tubulaire externe 63 du joint d'étanchéité 60 comprend un redan annulaire externe 65 reçu dans un logement 93 ménagé en correspondance dans le deuxième chambrage 92. La douille comprend en outre des crampons 94 en saillie dans le premier chambrage 91 et possède une surface externe ayant une portion tronconique 95. Les crampons 94 sont facultatifs.

La bague à section filetée 70 a un diamètre interne sensiblement égal au diamètre externe de la portion terminale 3 et inférieur au diamètre externe du collet battu 5 de sorte que le collet battu 5 forme une butée axiale pour la bague à section filetée 70. La bague à section filetée 70 est extérieurement divisée selon une direction axiale en une section de manoeuvre 71 à pans externes et une section filetée 72 de diamètre à fond de filet supérieur au diamètre externe du collet battu 5 et de la douille 90. La bague à section filetée 70 peut être ouvrante de manière à pouvoir être engagée latéralement sur la portion terminale 3 ou être montée sur la portion terminale 3 par l'intermédiaire d'une douille de butée 50 comme précédemment.

La bague à section taraudée 80 est divisée intérieurement selon une direction axiale en un premier chambrage 81 de diamètre sensiblement égal au diamètre externe de la portion terminale 12 relié par un épaulement interne 82 à un deuxième chambrage 83 délimitée par une surface tronconique correspondante de celle de la douille 90 et reliée à un taraudage 84 dont le diamètre correspond à celui de la section vissée 72.

La connexion est réalisée en engageant les bagues 30, 40 sur les portions terminales 3, 12. La douille de butée 90 et le joint d'étanchéité 60 sont ensuite enfilés sur la portion d'extrémité 12. On notera que les sections tubulaires 61 et 63 divergent légèrement pour faciliter l'introduction de la portion terminale 12 entre elles.

Les portions terminales 3, 12 des conduites 1, 11 sont ensuite approchées de telle manière que la portion annulaire 62 du joint d'étanchéité 60 soit intercalée entre les faces d'extrémité 7, 13 des portions terminales 3, 12.

La bague à section vissée est ramenée contre le collet battu 5 et la bague à section taraudée 80 est ramenée sur la douille de butée 90. La section vissée 72 est engagée dans le taraudage 84. Au fur et à mesure du vissage, la bague à section taraudée 80 coulisse par rapport à la douille 90 en appui contre le collet battu 5 de telle manière que la surface tronconique du chambrage 83 en glissant sur la portion tronconique 95 constitue un moyen de serrage de la douille 90 sur la portion terminale 12, provoquant la morsure des crampons 94 dans la surface externe de la portion terminale 12. On notera que la longueur de la partie de la douille 90 en saillie de la face terminale 13 est telle que le joint d'étanchéité 60 soit modérément comprimé. L'insert rigide d'armature 65 s'étendant dans la section annulaire 62 et la section tubulaire interne 63 plaque la section tubulaire interne 63 contre la surface interne de la seconde portion terminale 12 lorsque le joint d'étanchéité 60 est comprimé entre les portions terminales 1, 12.

Bien entendu, l'invention n'est pas limitée au mode de réalisation décrit et on peut y apporter des variantes de réalisation sans sortir du cadre de l'invention tel que défini par les revendications.

En particulier, l'invention est réalisable à partir d'une inversion cinématique des modes de réalisation décrits.

En outre, le joint 60 peut avoir une forme annulaire analogue à celle du joint 20.

## Revendications

1. Moyens de connexion d'une première portion terminale (3) d'élément de conduite et d'une seconde portion terminale (4) d'élément de conduite, les moyens de connexion comprenant un joint d'étanchéité (20) intercalé entre des faces d'extrémité (7, 8) des première et seconde portions terminales et des moyens de fixation (32, 44) qui sont montés sur les première et seconde portions terminales et y sont associée à des premiers et seconds moyens de butée axiale le long des première et seconde portions terminales pour maintenir ces dernières rapprochées en comprimant entre elles le joint d'étanchéité, **caractérisés en ce que** les premiers moyens de butée axiale comprennent une douille amovible (51) pourvue de moyens (50) de son blocage axial le long de la première portion terminale (3) et un épaulement externe (9) formé sur la première portion terminale dudit élément de conduite au voisinage de la face d'extrémité et les seconds moyens de butée axiale comprennent une douille amovible (50) pourvue de moyens (51) de son blocage axial le long de la seconde portion terminale et un épaulement externe (10) formé sur la seconde portion terminale (4) au voisinage de la face d'extrémité (8) de celle-ci, les douilles amovibles étant ouvrantes pour permettre leur engagement latéral sur la portion terminale correspondante et étant agencées pour coopérer avec l'épaulement externe de celle-ci, les moyens de fixation comprenant des pattes d'encliquetage (56) ayant une extrémité (57) solidaire d'une des douilles (50) et une extrémité (58) opposée qui s'étend au-delà de la face d'extrémité (7, 8) de la portion terminale correspondante (3, 4) et qui est agencée pour agripper l'autre douille.

2. Moyens de connexion selon la revendication 1, **caractérisés en ce que** les douilles (50) ont un diamètre externe au moins égal à un diamètre externe des épaulements externes (9, 10) des portions terminales (3, 4) et **en ce que** les moyens de fixation comprennent une section tubulaire filetée (32) et une section tubulaire taraudée qui sont solidaires chacune d'une bague montée sur une des douilles de telle manière que les douilles forment des butées axiales pour les bagues, au moins une des sections tubulaires filetée et taraudée s'étendant au-delà de la face d'extrémité (7, 8) de la portion terminale sur laquelle elle est montée pour être engagée sur l'autre section tubulaire lorsque les bagues sont en butée sur les douilles.

3. Moyens de connexion selon la revendicaiton 1 ou la revendication 2, **caractérisés en ce que** l'une des douilles (50) comporte une partie (52) agencée pour s'étendre au-delà de la face d'extrémité (7, 8) de la portion terminale (3, 4) correspondante lorsque la douille est en butée contre l'épaulement externe (9, 10) de cette portion terminale et pour assurer un positionnement du joint d'étanchéité (20) en regard de la face d'extrémité.

4. Moyens de connexion d'une première portion terminale (3) d'élément de conduite et d'une seconde portion terminale (12) d'élément de conduite, les moyens de connexion comprenant un joint d'étanchéité (60) intercalé entre des faces d'extrémité (13) des première et seconde portions terminales et des moyens de fixation (72, 84) qui sont montés sur les première et seconde portions terminales et y sont associés à des premiers et seconds moyens de butée axiale le long des première et seconde portions terminales pour maintenir ces dernières rapprochées en comprimant entre elles le joint d'étanchéité, **caractérisés en ce que** les premiers moyens de butée axiale comprennent un épaulement externe (9) formé sur la première portion terminale dudit élément de conduite au voisinage de la face d'extrémité et les seconds moyens de butée axiale comprennent une douille amovible (90) pourvue de moyens (94) de son blocage axial le long de la seconde portion terminale et **en ce que** la douille amovible (90) est radialement déformable et a une surface externe ayant une portion tronconique (95), et **en ce que** les moyens de fixation sont solidaires de première et deuxième bagues montées respectivement sur la première et la seconde portion terminale, la première bague (70) possédant un époulement pour coopérer avec l'épaulement externe (9) de la première portion terminale (3) et la seconde bague (80) possédant une surface interne tronconique (83) pour coopérer avec la portion tronconique (95) de la douille amovible (90) et constituer un moyen de serrage de la douille amovible sur la seconde portion terminale.

5. Moyens de connexion selon la revendication 4, **caractérisés en** ca que la douille a une surface interne en saillie de laquelle s'étend au moins un crapon (94).

6. Moyens de connexion selon la revendication 4 ou la revendication 5, **caractérisés en ce que** le joint d'étanchéité (60) comporte une section tubulaire externe (61) pour coiffer la seconde portion terminale (12) et une section annulaire (62) adjacente externe pour recoul'intérieur de la section tubulaire externe pour recouvrir la face d'extrémité (13) de la seconde portion terminale.

7. Moyens de connexion selon la revendication 5, **caractérisés en ce que** le joint d'étanchéité (60) comprend une section tubulaire interne (63) s'étendant à partir de la section annulaire (62) en regard de la section tubulaire externe (61).

8. Moyens de connexion selon la revendication 7, **caractérisés en ce que** les sections tubulaires interne et (63, 61) divergent lorsque le joint est non comprimé, et **en ce que** le joint d'étanchéité comporte un insert rigide d'armature (65) en L s'étendant dans la section annulaire (62) et la section tubulaire interne (63) pour plaquer la section tubulaire interne contre la surface interne de la seconde portion terminale lorsque le joint d'étanchéité est comprimé entre les portions terminales.

9. Moyens de connexion selon l'une quelconque des revendications 1 à 8, **caractérisés en ce que** l'épaulement externe formé sur la portion terminale (3, 4) est constitué d'une surface (9, 10) d'un collet battu (5, 6) de ladite portion terminale.

10. Moyens de connexion selon l'une quelconque des revendications 1 à 9, **caractérisés en ce que** le joint d'étanchéité (20, 60) comprend des moyens de continuité électrique entre les deux portions terminales (3, 4 ; 12) .

## Claims

1. Means for connecting a first terminal portion (3) of a pipe element and a second terminal portion (4) of a pipe element, the connection means comprising both a seal (20) inserted between the end faces (7, 8) of the first and second terminal portions, and fixing means (32, 44) mounted on the first and second terminal portions and associated thereat with first and second axial abutment means along the first and second terminal portions to hold them close together, compressing the seal between them, **characterized in that** the first axial abutment means comprise a removable bush (51) provided with means (50) for axial blocking thereof along the first terminal portion (3) and an outer shoulder (9) formed on the first terminal portion of said pipe element close to the end face and the second axial abutment means comprise a removable bush (50) provided with means (51) for axial blocking thereof along the second terminal portion and an outer shoulder (10) formed on the second terminal portion (4) close to the end face (8) thereof, the removable bushes being openable to allow them to be engaged laterally on the corresponding terminal portion and being arranged to cooperate with the outer shoulder thereof, the fixing means comprising snap fit tabs (56) having one end (57) integral with one of the bushes (5) and an opposing end (58) which extends beyond the end face (7, 8) of the corresponding terminal portion (3, 4) and which is arranged to grip the other bush.

2. Connection means according to claim 1, **characterized in that** the outside diameter of the bushes (5) is at least equal to an outside diameter of the outer shoulders (9, 10) of the terminal portions (3, 4), and **in that** the fixing means comprise a threaded tubular section (32) and a tapped tubular section which are each integral with a ring mounted on one of the bushes such that the bushes form axial abutments for the rings, at least one of the threaded and tapped tubular sections extending beyond the end face (7, 8) of the terminal portion on which it is mounted for engagement on the other tubular section when the rings are abutted on the bushes.

3. Connection means according to claim 1 or claim 2, **characterized in that** one of the bushes (50) comprises a portion (52) arranged to extend beyond the end face (7, 8) of the corresponding terminal portion (3, 4) when the bush is abutted against the outer shoulder (9, 10) of said terminal portion and to ensure positioning of the seal (20) facing the end face.

4. Means for connecting a first terminal portion (3) of a pipe element and a second terminal portion (12) of a pipe element, the connection means comprising both a seal (60) inserted between the end faces (13) of the first and second terminal portions, and fixing means (72, 84) mounted on the first and second terminal portions and associated thereat with first and second axial abutment means along the first and second terminal portions to hold them close together, compressing the seal between them, **characterized in that** the first axial abutment means comprise an outer shoulder (9) formed on the first terminal portion of said pipe element close to the end face and the second axial abutment means comprise a removable bush (90) provided with means (94) for axial blocking thereof along the second terminal portion and **characterized in that** the removable bush (90) is radially deformable and has an outer surface having a tapered portion (95), and **in that** the fixing means are integral with the first and second rings mounted respectively on the first and second terminal portions, the first ring (70) having a shoulder for cooperation with the outer shoulder (9) of the first terminal portion (3) and the second ring (80) having an internal tapered surface (83) for cooperation with the tapered portion (95) of the removable bush (90) and constituting a means for clamping the removable bush on the second terminal portion.

5. Connection means according to claim 4, **characterized in that** the bush has a projecting inner surface from which at least one clip (94) extends.

6. Connection means according to claim 4 or claim 5, **characterized in that** the seal (60) comprises an outer tubular section (61) to overlap the second terminal portion (12) and an adjacent annular section (62) projecting inwardly of the outer tubular section to cover the end face (13) of the second terminal portion.

7. Connection means according to claim 6, **characterized in that** the seal (60) comprises an inner tubular section (63) extending from the annular section (62) facing the outer tubular section (61).

8. Connection means according to claim 7, **characterized in that** the inner and outer tubular sections (63, 61) diverge when the seal is not compressed, and **in that** the seal comprises a rigid L-shaped reinforcing frame insert (65) extending within the annular section (62) and the inner tubular section (63) to flatten the inner tubular section against the inner surface of the second terminal portion when the seal is compressed between the terminal portions.

9. Connection means according to any one of claims 1 to 8, **characterized in that** the outer shoulder formed on the terminal portion (3, 4) is constituted by a surface (9, 10) of a formed flange (5, 6) of said terminal portion.

10. Connection means according to any one of claims 1 to 9, **characterized in that** the seal (20, 60) comprises means for electrical conduction between the two terminal portions (3, 4; 12).

## Patentansprüche

1. Verbindungsmittel zum Verbinden eines ersten Endabschnittes (3) eines Leitungselements mit einem zweiten Endabschnitt (4) eines Leitungselements, wobei die Verbindungsmittel eine Dichtung (20) umfassen, die zwischen den Stirnflächen (7, 8) des ersten und des zweiten Endabschnittes angeordnet ist, sowie Befestigungsmittel (32, 44), die an dem ersten und dem zweiten Endabschnitt angebracht und dort mit ersten und zweiten axialen Anschlagmitteln entlang des ersten und des zweiten Endabschnittes verbunden sind, um diese letztgenannten aneinander zu halten, während sie die Dichtung zwischen sich zusammendrücken, **dadurch gekennzeichnet, dass** die ersten axialen Anschlagmittel eine abnehmbare Hülse (51) umfassen, die mit Mitteln (50) für ihre axiale Blockierung entlang des ersten Endabschnittes (3) versehen ist, sowie eine äußere Schulter (9), die an dem ersten Endabschnitt des Leitungselements nahe der Stirnfläche ausgebildet ist, und dass die zweiten axialen Anschlagmittel eine abnehmbare Hülse (50) umfassen, die mit Mitteln (51) für ihre axiale Blockierung entlang des zweiten Endabschnittes versehen ist, sowie eine äußere Schulter (10), die an dem zweiten Endabschnitt (4) nahe der Stirnfläche (8) desselben ausgebildet ist, wobei die abnehmbaren Hülsen offen sind, um deren seitliches Eingreifen auf den entsprechenden Endabschnitt zu ermöglichen, sowie derart angeordnet sind, dass sie mit der äußeren Schulter desselben zusammenzuwirken, wobei die Befestigungsmittel Rastlaschen (56) umfassen, die ein Ende (57) haben, das fest mit einer der Hülsen (50) verbunden ist, sowie ein diesem entgegengesetztes Ende (58), das sich über die Stirnfläche (7, 8) des entsprechenden Endabschnittes (3, 4) hinaus erstreckt und derart angeordnet ist, dass es die andere Hülse ergreift.

2. Verbindungsmittel nach Anspruch 1, **dadurch gekennzeichnet, dass** die Hülsen (50) einen Außendurchmesser haben, der mindestens gleich einem Außendurchmesser der äußeren Schultern (9, 10) der Endabschnitte (3, 4) ist, und dass die Befestigungsmittel einen mit einem Außengewinde versehenen rohrförmigen Abschnitt (32) und einen mit einem Innengewinde versehenen rohrförmigen Abschnitt umfassen, die jeweils fest mit einem Ring verbunden sind, der an einer der Hülsen derart angebracht ist, dass die Hülsen axiale Anschläge für die Ringe bilden, wobei sich mindestens einer der rohrförmigen Abschnitte mit Außen- bzw. Innengewinde über die Stirnfläche (7, 8) des Endabschnittes hinaus erstreckt, an dem er angebracht ist, um mit dem anderen rohrförmigen Abschnitt in Eingriff gebracht zu werden, wenn die Ringe an den Hülsen anstoßen.

3. Verbindungsmittel nach Anspruch 1 oder Anspruch 2, **dadurch gekennzeichnet, dass** eine der Hülsen (50) einen Abschnitt (52) umfasst, der derart angeordnet ist, dass er sich über die Stirnfläche (7, 8) des entsprechenden Endabschnittes (3, 4) hinaus erstreckt, wenn die Hülse an der äußeren Schulter (9, 10) dieses Endabschnittes anstößt, und dass er eine Positionierung der Dichtung (20) gegenüber der Stirnfläche sicherstellt.

4. Verbindungsmittel zum Verbinden eines ersten Endabschnittes (3) eines Leitungselements mit einem zweiten Endabschnitt (12) eines Leitungselements, wobei die Verbindungsmittel eine Dichtung (60) umfassen, die zwischen den Stirnflächen (13) des ersten und des zweiten Endabschnittes angeordnet ist, sowie Befestigungsmittel (72, 84), die an dem ersten und dem zweiten Endabschnitt angebracht und dort mit ersten und zweiten axialen Anschlagmitteln entlang des ersten und des zweiten Endabschnittes verbunden sind, um diese letztgenannten aneinander zu halten, während sie die Dichtung zwischen sich zusammendrücken, **dadurch gekennzeichnet, dass** die ersten axialen Anschlagmittel eine äußere Schulter (9) umfassen, die an dem ersten Endabschnitt des Leitungselements nahe der Stirnfläche ausgebildet ist, und die zweiten axialen Anschlagmittel eine abnehmbare Hülse (90) umfassen, die mit Mitteln (94) für ihre axiale Blockierung entlang des zweiten Endabschnittes versehen ist, dass die abnehmbare Hülse (90) radial verformbar ist und eine Außenfläche mit einem kegelstumpfförmigen Abschnitt (95) hat, und dass die Befestigungsmittel fest mit einem ersten und einem zweiten Ring verbunden sind, die an dem ersten bzw. dem zweiten Endabschnitt angebracht sind, wobei der erste Ring (70) eine Schulter hat, um mit der äußeren Schulter (9) des ersten Endabschnittes (3) zusammenzuwirken, und der zweite Ring (80) eine kegelstumpfförmige Innenfläche (83) hat, um mit dem kegelstumpfförmigen Abschnitt (95) der abnehmbaren Hülse (90) zusammenzuwirken und Mittel zum Festspannen der abnehmbaren Hülse auf dem zweiten Endabschnitt zu bilden.

5. Verbindungsmittel nach Anspruch 4, **dadurch gekennzeichnet, dass** die Hülse eine Innenfläche hat, von der mindestens eine Kralle (94) absteht.

6. Verbindungsmittel nach Anspruch 4 oder Anspruch 5, **dadurch gekennzeichnet, dass** die Dichtung (60) einen äußeren rohrförmigen Abschnitt (61) hat, um den zweiten Endabschnitt (12) zu überdecken, sowie einen angrenzenden ringförmigen Abschnitt (62), der ins Innere des äußeren rohrförmigen Abschnittes vorsteht, um die Stirnfläche (13) des zweiten Endabschnittes zu überdecken.

7. Verbindungsmittel nach Anspruch 6, **dadurch gekennzeichnet, dass** die Dichtung (60) einen inneren rohrförmigen Abschnitt (63) umfasst, der sich ab dem ringförmigen Abschnitt (62) gegenüber dem äußeren rohrförmigen Abschnitt (61) erstreckt.

8. Verbindungsmittel nach Anspruch 7, **dadurch gekennzeichnet, dass** der innere und der äußere rohrförmige Abschnitt (63, 61) auseinandergehen, wenn die Dichtung nicht zusammengedrückt ist, und dass die Dichtung einen starren L-förmigen Stützeinsatz (65) hat, der sich in den ringförmigen Abschnitt (62) und den inneren rohrförmigen Abschnitt (63) erstreckt, um den inneren rohrförmigen Abschnitt gegen die Innenfläche des zweiten Endabschnittes zu drücken, wenn die Dichtung zwischen den Endabschnitten zusammengedrückt wird.

9. Verbindungsmittel nach einem der Ansprüche 1 bis 8, **dadurch gekennzeichnet, dass** die äußere Schulter, die an dem Endabschnitt (3, 4) ausgebildet ist, aus einer Fläche (9, 10) eines umgebogenen Kragens (5, 6) des genannten Endabschnittes gebildet ist.

10. Verbindungsmittel nach einem der Ansprüche 1 bis 9, **dadurch gekennzeichnet, dass** die Dichtung (20, 60) Mittel für eine elektrische Kontinuität zwischen den beiden Endabschnitten (3, 4; 12) umfasst.
